# EUROPEAN PATENT SPECIFICATION

(11) **EP 2 227 646 B1**
(45) Date of publication and mention of the grant of the patent: **25.09.2013**
(21) Application number: 08847517.3
(22) Date of filing: 05.11.2008
(51) Int. Cl.: F16K 11/16, F16K 31/528, F02M 25/07

(54) **VALVE ARRANGEMENT**
VENTILANORDNUNG
DISPOSITIF DE SOUPAPE

(30) Priority: 05.11.2007 ES 200702906
(43) Date of publication of application: 15.09.2010
(73) Proprietor: Dytech Ensa, S.L., 36315 Vigo, Pontevedra (ES)
(72) Inventor: CASTAÑO GONZÁLEZ, Carlos Manuel, E-36314 Vigo (ES)
(74) Representative: Calvo Ramón, Pablo
(86) International application number: PCT/EP2008/065002
(87) International publication number: WO 2009/059999

(56) References cited:
- WO-A-2006/092401
- DE-A1- 2 515 194
- DE-A1- 2 631 764
- FR-A- 1 550 343
- GB-A- 1 023 336

## Description

### TECHNICAL FIELD

The present invention relates to a valve arrangement controlling and regulating the exhaust gas recirculation, i.e. EGR, flow of an internal combustion engine.

### BACKGROUND ART

Arrangements are known in the current state of the art which allow exhaust gas recirculation from the exhaust manifold to the intake manifold of combustion engines known as EGR (Exhaust Gas Recirculation Systems).

These systems are formed by the metal connecting tubes, EGR tubes, heat exchanger with a bypass passage, EGR cooler, bypass valve and EGR valve. Said valves are independent elements and the actuation thereof requires independent actuators.

These systems recirculate exhaust gas from the exhaust manifold to the intake manifold of the engine after subjecting such gas to a cooling process so as to reduce the amount of NOx emissions.

International patent application WO2006/092401 discloses a valve which channels the exhaust gas towards a heat exchanger or towards a bypass passage according to pre-established control conditions, comprising a body with an inner chamber where the combustion gas is received through inlet passages and is directed towards outlet passages through outlet/inlet openings and an element for closing the outlet or inlet passages is formed by an actuating pin that can be axially actuated by means of an actuator, with two plates separated by a spring and which can move along the pin between two stops fixed thereto, and additionally a bellows controlled by a pneumatic actuator.

A drawback of the mentioned valve is derived from the fact that the due to the design of the valve, the latter has problems with leaks and/or seizing between the actuating pin and the valve closing plates.

This valve design requires a relative movement between the closing plate and the actuating pin of the valve, having problems with wear and/or seizing between the plate and the pin in high-temperature operating conditions.

Additionally, since it is not a leak-tight joint because there has to be minimal allowance between the plate and the pin so as to be able to carry out the relative movement between the two components, it has a level of internal leaks in its closed state position due to which EGR gas cannot be precisely controlled.

The proposed design furthermore does not improve the performance in comparison with current valve insofar as preventing sticking. One of the biggest problems with EGR valve operation is the sticking of the plates to the valve seat as a result of the solidification of some condensate residues of the exhaust gas when such remains cool. Said solidification causes the moving part of the valve to stick to the seat thereof.

FR 1 550 343 A discloses a valve arrangement having the features of the preamble of claim 1.

This valve is designed to mix two liquids by inversely varying the flow rate thereof.

### DISCLOSURE OF INVENTION

The present invention seeks to solve one or more of the drawbacks set forth above by means of a valve arrangement such as that claimed in claim 1. Embodiments of the invention are provided in the dependent claims.

An object of the present invention is to provide a valve arrangement controlling the circulating flow of a liquid or gaseous fluid between at least a first hole and a second hole preventing a valve from sticking to the seat thereof.

Another object of the invention is to provide a valve integrating the function of the EGR valve and the bypass valve by means of using a single actuator.

Yet another object of the invention is to provide a valve arrangement having high durability due to reducing the wear, preventing seizing and leaks between the pin and the plates as a result of the relative movement that must exist in the design shown between the pin and plate.

Yet another object of the invention is to prevent the plates from sticking to the valve seat, providing greater force for opening the valve.

Another object of the invention is to provide an actuating motor for the valve arrangement having a reduced opening and closing force for same.

Yet another object of the invention is to place the actuating motor far from the rotating shaft of the valve or closing/opening blade for the purpose of creating a high actuating moment to generate high valve actuation forces.

Yet another object of the invention is to provide a leak-tight contact between the valve seat and the valve itself.

Another object of the invention is to further maintain the valve closed in the event of failure of the valve arrangement.

Another object of the invention is to prevent damages on the actuating motor due to high temperatures.

Yet another object of the invention is to provide a high degree of leak-tightness in the closed position of the valve arrangement to prevent joints that must allow relative movements between plates, preventing leaks.

Yet another object of the invention is to improve the performance due to a pressure drop in the valve arrangement because it exerts a high actuating force which allows using valve head diameters exceeding those used today.

### BRIEF DESCRIPTION OF THE DRAWINGS

A more detailed explanation of the invention will be provided in the following description based on the attached figures:
Figure 1 shows a cross-section of a valve arrangement according to the invention,
Figure 2 shows a constructive detail of an assembly of blocking elements of the valve arrangement according to the invention,
Figure 3 shows a cross-section of the valve arrangement in the open position according to the invention,
Figure 4 shows another constructive detail of the blocking element assembly of the valve arrangement according to the invention,
Figure 5 shows a cross-section of another valve arrangement in the closed position according to the invention,

### BEST MODE FOR CARRYING OUT THE INVENTION

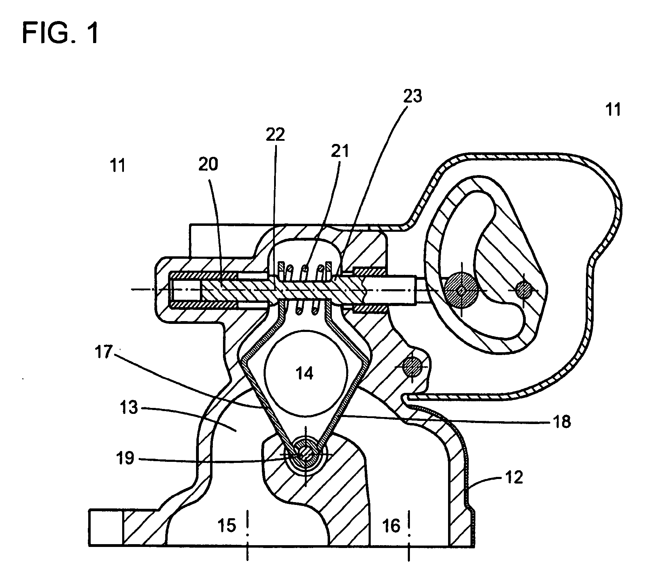

In relation to Figure 1, a cross-section of a valve arrangement in the closed position according to the invention is shown, which valve arrangement is located inside a body 12 with an inner chamber 13 in which a fluid, such as a liquid, a gas or the like, is received.

The body 12 comprises at least a first inlet/outlet passage 14 of the gas to the valve and at least a second inlet/outlet passage 15 and a third inlet/outlet passage 16 of the gas.

In the case at hand, the inner chamber 13 receives an inlet gas through the first inlet passage 14, coming from an inlet area and directed towards the second and third outlets 15, 16 communicating the chamber 13 with the outlet passages, or vice versa, and the inner chamber 13 comprises two inlet passages and one outlet passage.

The function of the valve arrangement is to open and close a blocking element assembly 17, 18, such as a blade or valve, which arrangement controls the gas flow amount flowing through the inlet/outlet passages 14, 15, 16 of the inner chamber 13.

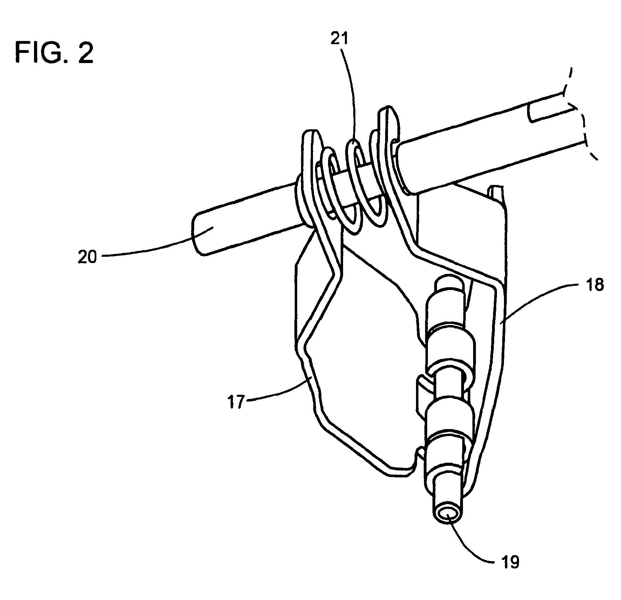

Now in. relation to Figures 1 and 2, the valve arrangement 11 comprises a first blade 17 and a second blade 18 which are joined at their proximal ends by means of a hinge pin 19 which is joined to a predetermined area of an inner wall of the inner chamber 13 close to a passage thereof, housed in the partition wall of the second and third outlet 15, 16 or the like for example.

The distal ends of the first and second blade 17, 18 are in physical contact with a first actuating pin 20 that can be axially actuated. Both distal ends of the first and second blade 17, 18 are kept separated by means of a first spring 21, such as a spring assembled on the first actuating pin 20.

Both the first blade 17 and the second blade 18 substantially have the same constructive shape, such as a continuous broken line.

When both blades 17, 18 are assembled on both pins, the first actuating pin 20 and the hinge pin 19, the blades 17, 18 substantially adopt an amphora-type shape ending in a tip at the proximal end and in a narrow neck at the distal end. The width of the neck of the amphora-type shape corresponds to the axial dimension of the first spring 21.

This amphora-type shape can be modified depending on the available space inside the inner chamber 13 and the constructive shape of both blades may differ for the same reason, i.e. available space within the area of the inner chamber 13.

The valve operates as follows: when the valve is closed, the first blade 17 and second blade 18 block the second outlet 15 and third outlet 16 of the inner chamber 13, respectively, as a result of the force exerted by the first spring 21 on the distal ends of both blades 17, 18.

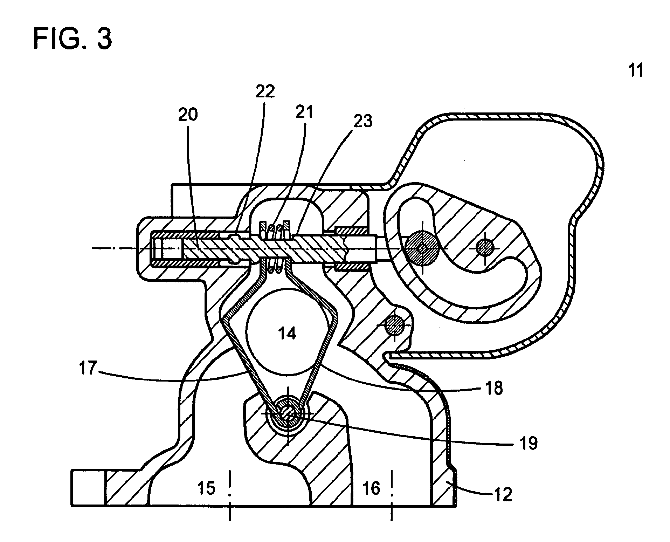

Now in relation to Figure 3, to open one of the outlets 15, 16 the first actuating pin 20 is shifted a predetermined axial distance in the suitable direction by means of an actuating motor, not shown, generating and applying enough force so that the corresponding stop member 22, 23 drags the blade 17, 18, overcoming the resistance of the first spring 21.

Therefore the stop 22, 23, in contact with the corresponding blade 17, 18, drags it to the opposing blade, which continues blocking its outlet, and accordingly the first spring 21 is compressed and the inlet gas exits through the corresponding outlet passage.

It must be noted that both the first and second blade 17, 18 are pivotably assembled on the hinge pin 19.

One feature of the valve arrangement according to the present invention is that it can carry out the function of controlling the amount of gas to be recirculated as well as the function of selecting the circuit through which the gas must circulate, therefore it can replace two separate valves such as an EGR valve and a bypass valve generally used in common EGR systems.

The operation of the valve arrangement is likewise independent of the spatial situation of the inlet/outlet assembly 14, 15, 16.

The blades 17, 18 can be manufactured of a material such as sheet metal, casting material, machining, sintering or by means of any other manufacturing process which allows obtaining the desired blade design.

The blade-spring assembly 17, 18, 19 can be shifted along the first actuating pin 20 between the first stop and a second stop 22, 23 fixed thereto. Each blade 17, 18 is in physical contact with one of the stops 22, 23 of the first actuating pin 20, respectively.

The physical contact between the first pin 20 and blade 17, 18 inevitably occurs in the moment the valve is actuated for the purpose of opening the blade 17, 18.

In the event that the valve is in the closed position, the stops 22, 23 being in contact option or the stops 22, 23 not being in contact option can be selected by design.

The design of both stops 22, 23 is a function of the design of the distal end of the blade 17, 18 and of the design of the first actuating pin 20 so that when the first actuating pin 20 moves in the valve opening direction, the stop comes into contact with the corresponding blade 17, 18, the first pin 20 transmitting the desired opening force.

In addition, when the first pin 20 axially shifts in the blade 17, 18 closing direction, there is no contact or transmission of force between the pin 20 and the blades.

To obtain the foregoing, the first pin 20 can have two different diameters, the central part of the first pin 20 having a smaller diameter than the diameter of the ends of the pin 20 so as to abut with the blades 17, 18 only in the blade 17, 18 opening direction.

In another embodiment, the diameter of the first pin 20 is constant, stops such as washers integral with the pin 20 located in the outer parts of the blades 17, 18, being installed, obtaining the same effect as that described above.

The designer has a certain degree of liberty to make a design allowing a blade 17, 18 to come into contact so that it can open with the first pin 20, transmitting the necessary force to overcome the closing forces of the spring 19, preventing the axial movement from tending to close the blade 17, 18; in this case there is no contact between the pin 20 and the blade 17, 18, and accordingly there is no transmission of force between pin 20 and blade 17, 18. The blades 17, 19 are closed by means of the action of the spring 19, which always tends to close them.

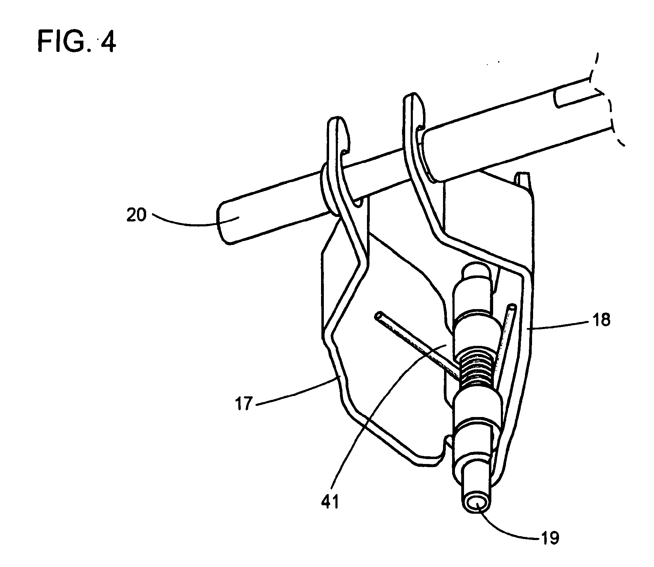

In relation to Figure 4, a torsion spring 41 can additionally be located in the hinge pin 19 to help the spring 21 assembled on the first actuating pin 20 in its task of placing both the first and second blades 17, 18 on the corresponding valve seat.

Obviously the spring 21 or the torsion spring 41, or both, will be assembled, depending on the desired precision of the control of the gas flow through both second and third outlets 16, 15. It must also be noted that the existence of the spring 21 or the torsion spring 41 prevents the simultaneous opening of the second and third outlets 14, 15.

The stop 22, 23, that is no longer in physical contact with its corresponding blade 17, 18 limits the movement of the first actuating pin 20 when it comes into contact with the corresponding inner wall of the body 12.

However, the end of travel is not necessarily marked by the physical contact between the stop 22, 23 and the inner wall of the body 12, but rather the movement of the actuating pin 20 is controlled by the movement of the actuating motor.

Therefore, a blade 17, 18 can be located between the ends of a shift range of the first actuating pin 20, one of its ends being the rest, non-opening position of the valve, and the other end the maximum shift of the actuating pin 20, maximum opening of the valve. The degree of opening of a blade is related to the magnitude of the shift of the actuating pin 20, which defines the amount of gas going through the valve.

This valve arrangement with an inlet area 14 and two outlet areas 15, 16 is particularly applicable, for example, for a heat exchanger of an EGR system with a bypass passage, the inlet area 14 being connected to the exhaust manifold and the outlet areas 15, 16 to the cooling module and to the bypass passage.

The valve arrangement 11 with two inlet areas and one outlet area is also applicable for a heat exchanger of an EGR system with a bypass passage, the two inlet areas being connected to the cooling module and to the bypass passage, and the outlet area to the intake manifold.

The valve arrangement 11 can have two inlet areas and one outlet area such that the operation of the valve such that the gas flows from an inlet passage to the outlet passage and from the other inlet passage to the same outlet passage is by means of the same dynamics as that of the valve shown in Figures 1 to 4.

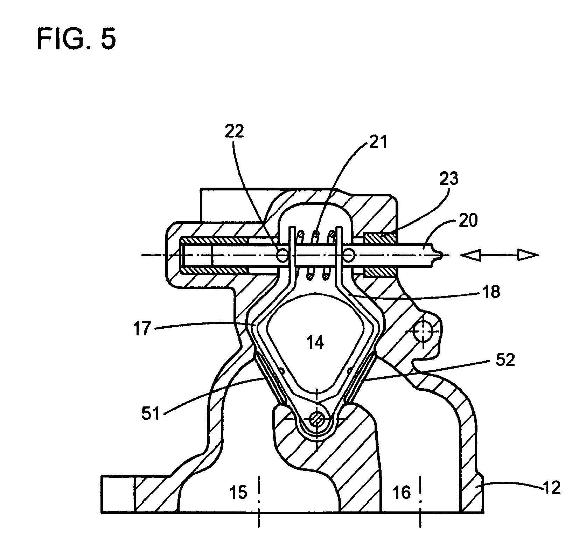

In relation to Figure 5, a blade 17, 18 additionally includes a sealing means 51, 52 to provide an improved sealing of the outlets 15, 16. The sealers 51, 52 can have a circular type shape or the like.

The sealing disc 51, 52 is fixed to the blade 17, 18 by means of a ball joint type joint at both ends of the joint, one end corresponding to the joint to the disc and the other end to the joint to the blade 17, 18, allowing a degree of movement of the disc 51, 52 with regard to the blade, and in turn providing a sealed seat in the valve seat made in the body 12.

A second spring can likewise be installed in the joint fixing the disc 51, 52 to the blade 17, 18 to prevent vibration of the disc caused by pressure pulses generated in the gas recirculation system.

The described valve arrangement 11 can be installed in a body 12 comprising a single inlet and a single outlet, for example, for the EGR valve function in which only the amount of gas to be recirculated is controlled.

The first actuating pin 20 can be axially shifted by means of, for example, a motor with a reduction gearbox coupled to an outlet in a rack and pinion system.

## Claims

1. A valve arrangement for an EGR/cooling module of an internal combustion engine, the arrangement including:
- an inner chamber (13) in which a fluid is received and at least a first inlet/outlet passage (14), a second inlet/outlet passage (15) and a third inlet/outlet passage (16) communicating with said inner chamber (13);
- a pair of blocking elements (17, 18) pivotally mounted inside said chamber (13) about a common axis defined by a hinge pin (19) mounted in a partition wall between the second and third inlet/outlet passages (15, 16) and configured to cooperate with a valve seat of a respective one of said second and third inlet/outlet passages (15, 16) to selectively open and close said second and third inlet/outlet passage (15, 16);
- said blocking elements are in the form of shaped blades (17, 18) having proximal ends converging towards and hinged to the hinge pin (19) and distal ends,
**characterized in that** the valve arrangement comprises at least one spring (21, 41) acting on said blades (17, 18) to urge them towards their closing position
and **in that** the arrangement comprises an actuating pin (20) acting on the distal ends of the blades (17, 18) when axially actuated wherein:
- the actuating pin (20) comprises a first stop (22) and a second stop (23) with the distal ends of the blades (17, 18) located therebetween;
- each stop (22, 23) is adapted to drag the distal end of its corresponding blade (17, 18) towards the distal end of the opposite blade (17, 18) when the pin (20) is axially displaced.

2. A valve arrangement as claimed in claim 1 wherein the pin (20) has two different diameters, the central part of the pin (20) having a smaller diameter than the diameter of the ends of the pin (20) so as to abut with the blades (17, 18) only in the blade opening direction.

3. A valve arrangement as claimed in claim 1 wherein the pin (20) comprises washers integrally mounted in the pin (20) and located in the outer parts of the blades (17, 18) adapted to act as the first and the second stop (22, 23).

4. A valve arrangement as claimed in any previous claim wherein both distal ends of the first and second blade (17, 18) are kept separated by means of a spring (21).

5. A valve arrangement as claimed in any previous claim wherein the blade has sealing means (51, 52).

6. A valve arrangement as claimed in claim 5 wherein the sealing means (51, 52) are sealing discs fixed to the blades by means of a ball joint type joint allowing a degree of movement of the disc with regard to the blade.

## Patentansprüche

1. Ventilanordnung für ein AGR/Kühlmodul eines Verbrennungsmotors, wobei die Anordnung aufweist:
- eine innere Kammer (13), in der ein Fluid aufgenommen ist und zumindest einen ersten Einlass/Auslass-Durchgang (14), einen zweiten Einlass/Auslass-Durchgang (15) und einen dritten Einlass/Auslass-Durchgang (16), die mit der inneren Kammer (13) in Verbindung stehen;
- ein Paar Blockierungselemente (17, 18), die innerhalb der Kammer (13) um eine gemeinsame Achse drehbar angebracht sind, die durch einen Scharnierstift (19) definiert ist, der in einer Trennwand zwischen dem zweiten und dritten Einlass/Auslass-Durchgang (15, 16) angebracht ist, und eingerichtet sind, mit einem Ventilsitz eines jeweiligen des zweiten und dritten Einlass/Auslass-Durchgangs (15, 16) zusammenzuwirken, um den zweiten und dritten Einlass/Auslass-Durchgang (15, 16) selektiv zu öffnen und zu schließen;
- wobei die Blockierungselemente von der Form geformter Blätter (17, 18) sind, die proximale Enden, die zum Scharnierstift (19) hin zusammenlaufen und an diesem angelenkt sind, und distale Enden aufweisen,
**dadurch gekennzeichnet, dass** die Ventilanordnung zumindest eine Feder (21, 41) aufweist, die auf die Blätter (17, 18), einwirkt, um diese zu ihrer Verschlussposition zu drängen und, dass die Anordnung einen Betätigungsstift (20) aufweist der, wenn axial betätigt, auf die distalen Enden der Blätter (17, 18) einwirkt, wobei:
- der Betätigungsstift (20) einen ersten Halt (22) und einen zweiten Halt (23) aufweist, wobei die distalen Enden der Blätter (17, 18) dazwischen angeordnet sind;
- jeder Halt (22, 23) angepasst ist, das distale Ende seines entsprechenden Blatts (17, 18) zum distalen Ende des gegenüberliegenden Blatts (17, 18) hin zu ziehen, wenn der Stift (20) axial verlagert wird.

2. Ventilanordnung nach Anspruch 1, bei welcher der Stift (20) zwei unterschiedliche Durchmesser aufweist, wobei der zentrale Teil des Stifts (20) einen kleineren Durchmesser aufweist, als der Durchmesser der Enden des Stifts (20), sodass er nur in der Blatt-Öffnungsrichtung mit den Blättern (17, 18) anstößt.

3. Ventilanordnung nach Anspruch 1, bei welcher der Stift (20) Anlaufscheiben aufweist, die in dem Stift (20) integral angebracht sind und in den äußeren Teilen der Blätter (17, 18) eingerichtet sind, und angepasst sind, als der erste und der zweite Halt (22, 23) zu wirken.

4. Ventilanordnung nach einem der vorhergehenden Ansprüche, bei der beide distalen Enden des ersten und zweiten Blatts (17, 18) mittels einer Feder (21) getrennt gehalten werden.

5. Ventilanordnung nach einem der vorhergehenden Ansprüche, bei der das Blatt Dichtungseinrichtungen (51, 52) aufweist.

6. Ventilanordnung nach Anspruch 5, bei der die Dichtungseinrichtungen (51, 52) Dichtungsscheiben sind, die an die Blätter mittels eines Kugelgelenk-artigen Gelenks befestigt sind, das einen Bewegungsgrad der Scheibe in Bezug auf das Blatt erlaubt.

## Revendications

1. Agencement de soupape pour un module de refroidissement/EGR (recyclage des gaz d'échappement) d'un moteur à combustion interne, l'agencement comprenant:
- une chambre intérieure (13) dans laquelle un fluide est reçu et au moins un premier passage d'entrée / de sortie (14), un deuxième passage d'entrée / de sortie (15) et un troisième passage d'entrée / de sortie (16) communiquant avec ladite chambre intérieure (13),
- une paire d'éléments de blocage (17, 18) montés par pivotement à l'intérieur de ladite chambre (13) autour d'un axe commun défini par un axe d'articulation (19) monté dans une paroi de séparation entre les deuxième et troisième passages d'entrée / de sortie (15, 16) et configurés pour coopérer avec un siège de soupape d'un passage respectif parmi lesdits deuxième et troisième passages d'entrée / de sortie (15, 16) afin d'ouvrir et de fermer de manière sélective lesdits deuxième et troisième passages d'entrée / de sortie (15, 16),
- lesdits éléments de blocage sont sous la forme de lames (17, 18) ayant des extrémités proximales qui convergent vers l'axe d'articulation (19) et articulées par rapport à celui-ci et des extrémités distales,
**caractérisé en ce que** l'agencement de soupape comprend au moins un ressort (21, 41) agissant sur lesdites lames (17, 18) pour les pousser vers leur position fermée
et **en ce que** l'agencement comprend un axe d'actionnement (20) qui agit sur les extrémités distales des lames (17, 18) lorsque actionné axialement, dans lequel :
- l'axe d'actionnement (20) comprend une première butée (22) et une seconde butée (23) avec les extrémités distales des lames (17, 18) positionnées entre elles,
- chaque butée (22, 23) est adaptée pour tirer l'extrémité distale de sa lame correspondante (17, 18) vers l'extrémité distale de la lame opposée (17, 18) lorsque l'axe (20) est axialement déplacé.

2. Agencement de soupape selon la revendication 1, dans lequel l'axe (20) a deux diamètres différents, la partie centrale de l'axe (20) ayant un diamètre plus petit que le diamètre des extrémités de l'axe (20) de manière à venir en butée avec les lames (17, 18) uniquement dans la direction d'ouverture de lame.

3. Agencement de soupape selon la revendication 1, dans lequel l'axe (20) comprend des rondelles montées intégralement dans l'axe (20) et positionnées dans les parties extérieures des lames (17, 18) adaptées pour agir en tant que première et seconde butée (22, 23).

4. Agencement de soupape selon l'une quelconque des revendications précédentes, dans lequel les deux extrémités distales de la première et de la seconde lame (17, 18) sont maintenues séparées par l'intermédiaire d'un ressort (21).

5. Agencement de soupape selon l'une quelconque des revendications précédentes, dans lequel la lame dispose de moyens d'étanchéité (51, 52).

6. Agencement de soupape selon la revendication 5, dans lequel les moyens d'étanchéité (51, 52) sont des disques d'étanchéité fixés aux lames par l'intermédiaire d'un joint de type joint à rotule autorisant un degré de mouvement du disque par rapport à la lame.
